# EUROPEAN PATENT SPECIFICATION

(11) **EP 3 572 688 B1**
(45) Date of publication and mention of the grant of the patent: **03.03.2021**
(21) Application number: 18742229.0
(22) Date of filing: 05.01.2018
(51) Int. Cl.: F16F 13/10

(54) **VIBRATION-DAMPING DEVICE**
SCHWINGUNGSDÄMPFUNGSVORRICHTUNG
DISPOSITIF D'AMORTISSEMENT DE VIBRATIONS

(30) Priority: 19.01.2017 JP 2017007362
(43) Date of publication of application: 27.11.2019
(73) Proprietor: Bridgestone Corporation, Tokyo 104-8340 (JP)
(72) Inventor: UEKI Akira, Tokyo 104-8340 (JP); NAGASAWA Masakazu, Tokyo 104-8340 (JP); BABA Yuta, Tokyo 104-8340 (JP)
(74) Representative: Oxley, Robin John George
(86) International application number: PCT/JP2018/000075
(87) International publication number: WO 2018/135312

(56) References cited:
- EP-A1- 0 154 268
- WO-A1-2010/013465
- JP-A- S6 465 345
- JP-A- S6 465 345
- JP-A- S60 192 139
- JP-A- S63 270 938
- JP-U- S6 065 442
- US-A- 4 880 215
- US-B2- 8 191 876

## Description

### [Technical Field]

The present invention relates to a vibration-damping device.

Priority is claimed on Japanese Patent Application No. 2017-7362, filed January 19, 2017.

### [Background Art]

In the related art, a vibration-damping device as shown in the following Patent Document 1 is known. A liquid chamber is formed in the vibration-damping device, and the liquid chamber is divided into a main liquid chamber and an auxiliary liquid chamber using a partition member. An orifice passage through which the main liquid chamber communicates with the auxiliary liquid chamber is formed in the partition member, and, when the fluid flows in the orifice passage in accordance with the input of vibration, the vibration can be absorbed and attenuated.

Furthermore the document EP 0154268A1 discloses a vibration damping device comprising all the features of the preamble of claim 1.

### [Citation List]

### [Patent Document]

### [Patent Document 1]

International Publication No. WO 2010/119595

### [Summary of Invention]

### [Technical Problem]

Incidentally, in the vibration-damping device of this type, there is a need to improve the characteristics with respect to both a vibration having a relatively small frequency and a relatively large amplitude (hereinafter referred to as a large vibration) and a vibration having a relatively large frequency and a relatively small amplitude (hereinafter referred to as minute vibration).

The present invention has been made in consideration of such circumstances, and an object of the present invention is to provide a vibration-damping device having improved characteristics against both a large vibration and a minute vibration.

### [Solution to Problem]

A vibration-damping device according to the present invention includes an outer cylinder connected to one of a vibration generation portion and a vibration reception portion; an inner member connected to the other thereof; an elastic body which connects together the outer cylinder and the inner member; and a partition member configured to partition a liquid chamber in the outer cylinder into a main liquid chamber and an auxiliary liquid chamber having the elastic body as a part of a partition wall, an orifice passage through which the main liquid chamber communicates with the auxiliary liquid chamber being formed in the partition member, wherein the vibration-damping device includes: an intermediate cylinder disposed between the outer cylinder and the inner member and connected to the elastic body; and a dividing member which is connected to the intermediate cylinder and divides the main liquid chamber into a first main liquid chamber having an inner portion of the elastic body located radially inward of the intermediate cylinder as a part of the partition wall and a second main liquid chamber having an outer portion of the elastic body located radially outward of the intermediate cylinder as a part of the partition wall, the inner member is disposed radially inward of the intermediate cylinder, the dividing member includes a dividing member main body in which an accommodation chamber, a first communication hole through which the accommodation chamber communicates with the first main liquid chamber, and a second communication hole through which the accommodation chamber communicates with the second main liquid chamber are formed, and a movable member which is accommodated in the accommodation chamber and is displaced or deformed in accordance with a pressure difference between the first main liquid chamber and the second main liquid chamber, and the dividing member main body blocks one end opening portion of the intermediate cylinder located in the main liquid chamber.

### [Effects of Invention]

According to the present invention, it is possible to provide a vibration-damping device having improved characteristics against both vibrations of vibration having a relatively small frequency and a relatively large amplitude and vibration having a relatively large frequency and a relatively small amplitude.

### [Brief Description of Drawings]

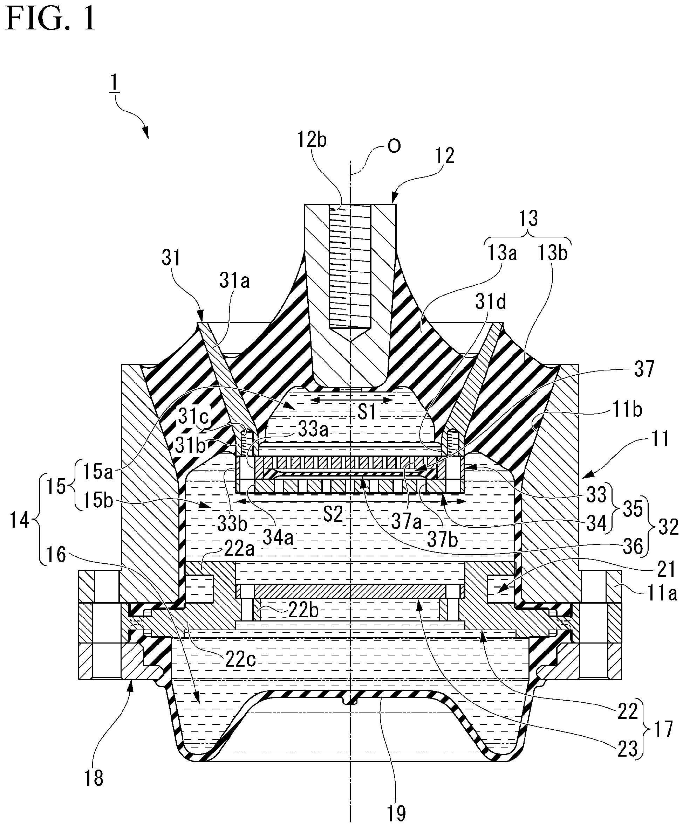

Fig. 1 is a longitudinal sectional view of a vibration-damping device according to an embodiment of the present invention.

### [Description of Embodiments]

Hereinafter, a configuration of a vibration-damping device according to a first embodiment will be described with reference to Fig. 1.

As shown in Fig. 1, a vibration-damping device 1 includes an outer cylinder 11 connected to one of a vibration generation portion and a vibration reception portion, an inner member 12 connected to the other thereof, an elastic body 13 connected to the outer cylinder 11 and the inner member 12, and a partition member 17 which divides a liquid chamber 14 in the outer cylinder 11 in which the liquid is sealed into a main liquid chamber 15 having the elastic body 13 as part of partition wall and an auxiliary liquid chamber 16 in an axial direction along a central axis O of the outer cylinder 11.

In a case in which the vibration-damping device 1 is used as, for example, an engine mount of an automobile, the outer cylinder 11 is connected to a vehicle body serving as the vibration reception portion, and the inner member 12 is connected to an engine serving as the vibration generation portion. Therefore, transmission of engine vibration to the vehicle body is inhibited.

Here, in the present embodiment, the main liquid chamber 15 side in the axial direction with respect to the partition member 17 is referred to as an upper side, and the auxiliary liquid chamber 16 side is referred to as a lower side. Further, in a plan view of the vibration-damping device 1 as viewed from the axial direction, a direction orthogonal to the central axis O is referred to as a radial direction, and a direction of rotating around the central axis O is referred to as a circumferential direction.

An annular fixed portion 11a which protrudes outward in the radial direction is formed at a lower end portion of the outer cylinder 11. A tapered portion 11b which extends gradually outward in the radial direction toward the upper side is formed on the inner peripheral surface of the outer cylinder 11 from the central portion to the upper end portion in the axial direction. In the inner peripheral surface of the outer cylinder 11, a lower portion of the tapered portion 11b and a lower end opening edge of the outer cylinder 11 are covered with a covering rubber. The covering rubber is integrally formed with the elastic body 13.

The inner member 12 is disposed on the radially inner side of an intermediate cylinder 31 to be described later. The inner member 12 is formed in a rod shape and disposed coaxially with the central axis O. The inner member 12 is disposed on the radially inner side of the outer cylinder 11. A female screw 12b extending downward in the axial direction is formed on the upper end surface of the inner member 12. The outer peripheral surface of the inner member 12 gradually reduces in diameter toward the lower side. The lower end portion of the inner member 12 is located below the upper end opening edge of the outer cylinder 11.

The elastic body 13 connects together the tapered portion 11b of the outer cylinder 11 to the outer peripheral surface of the inner member 12. The outer peripheral side of the elastic body 13 is vulcanized and adhered to the tapered portion 11b of the outer cylinder 11. The inner peripheral side of the elastic body 13 is vulcanized and adhered to the outer peripheral surface of the inner member 12. The elastic body 13 extends upward gradually from the outer side toward the inner side in the radial direction. The upper end opening portion of the outer cylinder 11 is sealed by the elastic body 13.

An orifice passage 21 allowing communication between the main liquid chamber 15 and the auxiliary liquid chamber 16 is formed in the partition member 17. The partition member 17 is provided with a flat main body member 22 formed in a cylindrical shape, and a disk-like closing member 23 for closing the inner side of the main body member 22.

An upper flange 22a protruding radially outward from the upper end opening edge, an annular inner flange 22b protruding radially inward from the inner peripheral surface, and a lower flange 22c protruding radially outward from the lower end opening edge are formed in the main body member 22. The outer peripheral edge of the upper flange 22a is fluid-tightly fitted in the outer cylinder 11 via a covering rubber. The covering rubber is sandwiched between a part of the upper surface of the lower flange 22c and the lower end edge of the outer cylinder 11.

The aforementioned orifice passage 21 is defined by the outer peripheral surface of the main body member 22, the lower surface of the upper flange 22a, and the upper surface of the lower flange 22c. The orifice passage 21 communicates with the main liquid chamber 15 through a main liquid chamber side opening (not shown) formed in the upper flange 22a, and communicates with the auxiliary liquid chamber 16 through an auxiliary liquid chamber side opening (not shown) formed in the lower flange 22c.

When liquid flows in through the orifice passage 21 with the input of vibration to the vibration-damping device 1, liquid column resonance occurs in the orifice passage 21 and the vibration is damped and absorbed.

The closing member 23 is placed on the inner flange 22b and fixed to the inner flange 22b using a bolt or the like (not shown).

An annular diaphragm ring 18 is disposed below the partition member 17. An outer peripheral portion of a diaphragm 19 formed to be elastically deformable by a rubber material or the like is adhered to the inner peripheral surface of the diaphragm ring 18 by vulcanization. Penetration holes extending in the axial direction are formed in each of the fixed portion 11a of the outer cylinder 11, the lower flange 22c of the main body member 22 of the partition member 17, and the diaphragm ring 18. When the penetration holes are fastened by bolts or the like, the diaphragm ring 18 and the diaphragm 19 are fixed to the outer cylinder 11 via the partition member 17. The diaphragm 19 seals the lower end opening portion of the outer cylinder 11.

The liquid chamber 14 in which the liquid is sealed is defined in the outer cylinder 11 by the diaphragm 19 and the elastic body 13. As the liquid sealed in the liquid chamber 14, for example, water, ethylene glycol or the like can be used. Further, the diaphragm 19 expands and contracts with inflow and outflow of the liquid into and from the auxiliary liquid chamber 16.

Here, the vibration-damping device 1 in the present embodiment includes an intermediate cylinder 31 disposed between the outer cylinder 11 and the inner member 12, and a dividing member 32 which partitions the main liquid chamber 15 into a first main liquid chamber 15a and a second main liquid chamber 15b.

The intermediate cylinder 31 has an inclined cylindrical portion 31a extending gradually inward in the radial direction from the upper side to the lower side, and a straight cylindrical portion 31b extending downward from the lower end portion of the inclined cylindrical portion 31a. At the lower end opening edge of the straight cylindrical portion 31b, a female screw portion 31c extending upward is formed. The intermediate cylinder 31 is connected to the elastic body 13 and divides the elastic body 13 into an inner portion 13a inside the intermediate cylinder 31 and an outer portion 13b outside the intermediate cylinder 31 in the radial direction. The inner portion 13a connects together the inner member 12 and the intermediate cylinder 31, and the outer portion 13b connects together the outer cylinder 11 and the intermediate cylinder 31. The inner portion 13a has the rigidity lower than that of the outer portion 13b.

In a longitudinal sectional view along the central axis O, the inclination of the outer peripheral surface of the inclined cylindrical portion 31a with respect to the central axis O is substantially the same as the inclination of the tapered portion 11b of the outer cylinder 11 with respect to the central axis O. Thus, when the intermediate cylinder 31 is lowered with respect to the outer cylinder 11, the outer portion 13b of the elastic body 13 is compressed in the radial direction.

The first main liquid chamber 15a is defined by the inner peripheral surface of the inner portion 13a of the elastic body 13 and the upper surface of the dividing member 32. Thus, in the first main liquid chamber 15a, the inner portion 13a is formed as a part of the partition wall.

The second main liquid chamber 15b is defined by the inner peripheral surface of the outer portion 13b of the elastic body 13, the inner peripheral surface of the outer cylinder 11, and the upper surface of the partition member 17. Therefore, in the second main liquid chamber 15b, the outer portion 13b is formed as a part of the partition wall.

The dividing member 32 includes a dividing member main body 35 including an upper member 33 and a lower member 34, and a disk-shaped movable member 36. The dividing member main body 35 closes a one end opening portion 31d of the intermediate cylinder 31 located in the main liquid chamber 15.

The upper member 33 is formed in a disk shape, and an accommodation cylindrical portion 33b that protrudes downward is formed at the outer peripheral edge thereof. A fastening hole 33a which penetrates the accommodation cylindrical portion 33b in the axial direction is formed in the upper member 33. The lower member 34 is formed in a disk shape having an outer diameter equal to that of the accommodation cylindrical portion 33b, and is in contact with the lower end opening edge of the accommodation cylindrical portion 33b. A fastening hole 34a penetrating the lower member in the axial direction is formed at the outer peripheral edge of the lower member 34. The dividing member main body 35 is fixed to the intermediate cylinder 31 by screwing bolts (not shown) to the female screw portion 31c of the intermediate cylinder 31 through the fastening holes 33a and 34a of the upper member 33 and the lower member 34.

An accommodation chamber 37 for accommodating the movable member 36, a first communication hole 37a penetrating the upper member 33 in the axial direction, and a second communication hole 37b penetrating the lower member 34 in the axial direction are formed in the dividing member main body 35. A plurality of first communication holes 37a and a plurality of second communication holes 37b are formed at intervals in the circumferential direction and the radial direction, respectively.

The accommodation chamber 37 is defined by the lower surface of the upper member 33, the inner peripheral surface of the accommodation cylindrical portion 33b surrounding the movable member 36, and the upper surface of the lower member 34. The first communication hole 37a causes the accommodation chamber 37 to communicate with the first main liquid chamber 15a. The second communication hole 37b causes the accommodation chamber 37 to communicate with the second main liquid chamber 15b. Thus, the first main liquid chamber 15a communicates with the auxiliary liquid chamber 16 through the accommodation chamber 37, the second main liquid chamber 15b, and the orifice passage 21 of the partition member 17. The flow passage resistance of the orifice passage 21 is larger than the flow passage resistance of the first communication hole 37a and the second communication hole 37b.

The movable member 36 is formed in a disk shape by an elastic member such as rubber. The outer diameter of the movable member 36 is smaller than the inner diameter of the accommodation cylindrical portion 33b. The thickness of the radially outer end portion of the movable member 36 is larger than the axial distance between the lower surface of the upper member 33 and the upper surface of the lower member 34, and the thickness of the other portions is smaller than the distance. For this reason, the radially outer end portion of the movable member 36 is axially sandwiched and fixed by the upper member 33 and the lower member 34, and an axial gap is formed between the radially central portion of the movable member 36 and the inner surface of the accommodation chamber 37. The movable member 36 deforms in accordance with the pressure difference between the first main liquid chamber 15a and the second main liquid chamber 15b.

Next, the operation of the vibration-damping device 1 configured as described above will be described.

When vibration in the axial direction is input to the vibration-damping device 1, the outer cylinder 11 and the inner member 12 are relatively displaced in the axial direction, while elastically deforming the elastic body 13 for connecting the outer cylinder 11 and the inner member 12 to each other.

Here, when a large vibration is input to the vibration-damping device 1, the movable member 36 is strongly pressed against the wall surface of the accommodation chamber 37 because an amount of liquid flowing into the accommodation chamber 37 is large, and the first communication hole 37a or the second communication hole 37b is closed. Therefore, the flow of liquid between the first main liquid chamber 15a and the accommodation chamber 37 through the first communication hole 37a, and the flow of liquid between the second main liquid chamber 15b and the accommodation chamber 37 through the second communication hole 37b are restricted. Therefore, axial displacement of the inner member 12 with respect to the dividing member 32 is suppressed, and the inner member 12, the dividing member 32, and the intermediate cylinder 31 integrally elastically displace in the axial direction, while elastically deforming the outer portion 13b of the elastic body 13.

For this reason, an area (hereinafter referred to as an effective pressure reception area) of an effective pressure reception portion which applies the hydraulic pressure to the main liquid chamber 15 in accordance with the vibration to be input increases.

The effective pressure reception area S2 in the case of large vibration is represented by a value of a volume of the liquid extruded from the second main liquid chamber 15b to the auxiliary liquid chamber 16, when the inner member 12 is lowered by 1 mm with respect to the outer cylinder 11, in a state in which the communication between the first main liquid chamber 15a and the second main liquid chamber 15b is blocked by the movable member 36. As shown in Fig. 1, the effective pressure reception area S2 is substantially equal to the area of the lower surface of the dividing member 32.

On the other hand, when the minute vibration is input to the vibration-damping device 1, since the amount of liquid flowing in and out of the accommodation chamber 37 is relatively small, the first communication hole 37a and the second communication hole 37b are not blocked by the movable member 36. At this time, the movable member 36 is elastically deformed such that the radially central portion reciprocates in the axial direction, with the radially outer end portion as a fixed end. With the elastic deformation, the flow of the liquid between the first main liquid chamber 15a and the accommodation chamber 37 through the first communication hole 37a, and the flow of the liquid between the second main liquid chamber 15b and the accommodation chamber 37 through the second communication hole 37b are permitted. Therefore, axial displacement of the inner member 12 with respect to the dividing member 32 is permitted, and the inner member 12 elastically displaces in the axial direction with respect to the dividing member 32, while elastically deforming the inner portion 13a of the elastic body 13.

Here, the effective pressure reception area S1 in the case of the minute vibration is represented by the value of the volume of the liquid extruded from the main liquid chamber 15a to the second main liquid chamber 15b, when the inner member 12 is lowered by 1 mm with respect to the dividing member 32 in the state in which the first communication hole 37a and the second communication hole 37b are opened. The effective pressure reception area S1 is substantially equal to the area of the lower surface of the inner member 12, as shown in Fig. 1.

The effective pressure reception area S1 in the case of minute vibration is smaller than the effective pressure reception area S2 in the case of large vibration.

As described above, in the vibration-damping device 1 of the present embodiment, the effective pressure reception area changes when a large vibration is input and when a small vibration is input. As a result, when a large vibration is input, a larger effective pressure receiving area S2 applies, and a liquid having a high flow rate flows into the orifice passage 21 such that excellent damping performance is exhibited, thereby allowing vibrations of the engine to subside sooner or the like and the ride quality to be improved. On the other hand, when minute vibration is input, a small effective pressure reception area S1 can be applied to reduce the amount of liquid flowing from the first main liquid chamber 15a into the second main liquid chamber 15b. By reliably inhibiting any increase in the dynamic spring constant of the vibration damping device 1, it is possible to effectively reduce transmission of vibration to the vehicle body, or the like from, for example the engine, or the like.

In addition, when the large vibration is input, by elastically deforming the outer portion 13b which is located radially outside the inner portion 13a of the elastic body 13, has high rigidity and is hard to deform, it is possible to reliably increase the overall dynamic spring constant of the vibration-damping device 1, and to further improve the riding comfort.

In addition, even when the movable member 36 collides with the inner surface of the accommodation chamber 37 at a high frequency with the input of the minute vibration, or even when the movable member 36 strongly collides with the inner surface of the accommodation chamber 37 with the input of the large vibration, since the accommodation chamber 37 for accommodating the movable member 36 is formed in the dividing member main body 35 connected to the intermediate cylinder 31, the impact force is absorbed by the elastic body 13 before propagating to the outer cylinder 11 or the inner member 12, and it is possible to suppress propagating to a vibration reception portion.

As described above, according to the vibration-damping device 1 of the present embodiment, excellent characteristics can be exhibited with respect to both large vibration and minute vibration.

Furthermore, since the elastic body 13 is divided into the inner portion 13a and the outer portion 13b by the intermediate cylinder 31, it is possible to easily adjust the rigidity and the like of each of the outer portion 13b that is elastically deformed mainly when large vibration is input and the inner portion 13a which is elastically deformed mainly when the minute vibration is input of the elastic body 13. Therefore, it is possible to easily adjust the characteristics of the vibration-damping device 1 with respect to both the large vibration and the minute vibration.

In addition, since the rigidity of the outer portion 13b of the elastic body 13 is high, the inner member 12 and the dividing member 32 are less likely to be displaced in the axial direction at the time of large vibration input, and it is possible to reliably increase the dynamic spring constant of the vibration-damping device 1 and thus to further improve the damping performance.

In addition, since the rigidity of the inner portion 13a of the elastic body 13 is low, when vibration having a relatively small amplitude and a relatively large frequency is input, the inner member 12 is easily displaced with respect to the dividing member 32, and it is possible to more reliably suppress an increase in dynamic spring constant of the vibration-damping device 1.

The technical scope of the present invention is not limited to the above embodiment, and various modifications can be made without departing from the scope of the present invention.

For example, although the intermediate cylinder 31 divides the elastic body 13 into the inner portion 13a and the outer portion 13b in the shown example, the present invention is not limited thereto, and the intermediate cylinder 31 may not divide the elastic body 13 in the radial direction.

Further, in the embodiment, the inner portion 13a of the elastic body 13 has been described as having rigidity lower than the outer portion 13b. However, the present invention is not limited thereto, and the inner portion 13a may have rigidity higher than the outer portion 13b.

According to the vibration-damping device of the present invention, the movable member which can be deformed or displaced in the axial direction is accommodated in the accommodation chamber. When large vibration is input to the vibration-damping device, since the momentum of flow of liquid flowing into the accommodation chamber is strong, the movable member is strongly pressed against the wall surface of the accommodation chamber, and the first communication hole or the second communication hole is closed. Thus, since the flow of the liquid between the first main liquid chamber and the second main liquid chamber through the accommodation chamber is restricted, the axial displacement of the inner member with respect to the dividing member is suppressed.

At this time, since the inner member, the dividing member, and the intermediate cylinder are integrally elastically displaced in the axial direction while elastically deforming the outer portion of the elastic body, the effective pressure reception area which applies the hydraulic pressure to the main liquid chamber in accordance with the vibration increases, excellent damping performance can be exhibited by causing a large flow rate of liquid to flow into the orifice passage, vibration of an engine or the like can be converged early, and improvement in riding comfort can be achieved.

Further, at this time, it is possible to reliably increase the dynamic spring constant of the entire vibration-damping device, by elastically deforming the outer portion which is located radially outward of the inner portion of the elastic body and is hard to deform. The ride quality can be further improved by suppressing the vibration of the engine and the like to a low level.

On the other hand, when minute vibration is input to the vibration-damping device, since the momentum of the flow of the liquid flowing in and out of the accommodation chamber is relatively weak, the first communication hole and the second communication hole are not closed by the movable member, and the flow of liquid between the first main liquid chamber and the second main liquid chamber through the accommodation chamber is permitted. Therefore, since an axial displacement of the inner member with respect to the dividing member is permitted, and the inner member is displaced in the axial direction with respect to the dividing member, while elastically deforming the inner portion of the elastic body, the effective pressure reception area of the main liquid chamber decreases, and the amount of liquid flowing from the first main liquid chamber into the second main liquid chamber can be reduced. By reliably suppressing the increase in the dynamic spring constant of the vibration-damping device, the vibration transmitted from the engine or the like to the vehicle body or the like can be effectively suppressed.

Further, since the accommodation chamber for accommodating the movable member is formed in the dividing member main body connected to the intermediate cylinder, even if the movable member collides with the inner surface of the accommodation chamber at the time of input of large vibration and minute vibration, the impact force is absorbed by the elastic body before propagating to the outer cylinder or the inner member, and the propagation of the impact force to the vibration reception portion can be suppressed.

Here, the intermediate cylinder may divide the elastic body into the inner portion and the outer portion in the radial direction, the inner portion may connect the inner member and the intermediate cylinder, and the outer portion may connect the outer cylinder and the intermediate cylinder.

In this case, since the elastic body is divided into the inner portion and the outer portion, it is possible to easily adjust rigidity or the like of each an outer portion of the elastic body which is elastically deformed mainly when large vibration is input, and an inner portion which is elastically deformed mainly when minute vibration is input. This makes it possible to easily tune the characteristics of the vibration-damping device for both large vibration and minute vibration.

Further, the inner portion of the elastic body may have rigidity lower than outer portions.

In this case, since the rigidity of the outer portion of the elastic body is high, and the inner member and the dividing member are less likely to be displaced in the axial direction during input of a large vibration, it is possible to reliably increase the dynamic spring constant of the vibration-damping device, and to further improve the damping performance.

In addition, since the rigidity of the inner portion of the elastic body is low, the inner member is easily displaced with respect to the dividing member at the time of input of minute vibration, and it is possible to more reliably suppress an increase in the dynamic spring constant of the vibration-damping device.

### [Industrial Applicability]

According to the present invention, it is possible to provide a vibration-damping device having improved characteristics with respect to both vibrations of a vibration having a relatively small frequency and a relatively large amplitude and a vibration having a relatively large frequency and a relatively small amplitude.

### [Reference Signs List]

- 1: Vibration-damping device
- 11: Outer cylinder
- 12: Inner member
- 13: Elastic body
- 13a: Inner portion
- 13b: Outer portion
- 14: Liquid chamber
- 15: Main liquid chamber
- 15a: First main liquid chamber
- 15b: Second main liquid chamber
- 16: Auxiliary liquid chamber
- 17: Partition member
- 21: Orifice passage
- 31: Intermediate cylinder
- 31d: One end opening portion
- 32: Dividing member
- 35: Dividing member main body
- 36: Movable member
- 37: Accommodation chamber
- 37a: First communication hole
- 37b: Second communication hole

## Claims

1. A vibration-damping device (1) comprising: an outer cylinder (11) connected to one of a vibration generation portion and a vibration reception portion, an inner member (12) connected to the other of the vibration generation portion and the vibration reception portion; an elastic body (13) which connects together the outer cylinder and the inner member (12); and a partition member (17) configured to partition a liquid chamber in the outer cylinder into a main liquid chamber (15) with the elastic body as a part of a partition wall and an auxiliary liquid chamber (16), an orifice passage (21) through which the main liquid chamber communicates with the auxiliary liquid chamber being formed in the partition member, wherein the vibration-damping device comprises: an intermediate cylinder (31) disposed between the outer cylinder and the inner member and connected to the elastic body; and a dividing member (32) which is connected to the intermediate cylinder and divides the main liquid chamber into a first main liquid chamber (15a) having an inner portion of the elastic body (13a) located radially inward of the intermediate cylinder as a part of the partition wall and a second main liquid chamber (15b) having an outer portion of the elastic body (13b) located radially outward of the intermediate cylinder as a part of the partition wall, the inner member is disposed radially inward of the intermediate cylinder, **characterised in that** the dividing member includes a dividing member main body (35) in which an accommodation chamber (37), a first communication hole (37a) through which the accommodation chamber communicates with the first main liquid chamber, and a second communication hole (37b) through which the accommodation chamber communicates with the second main liquid chamber are formed, and a movable member (36) which is accommodated in the accommodation chamber and is displaced or deformed in accordance with a pressure difference between the first main liquid chamber and the second main liquid chamber, and the dividing member main body blocks one end opening portion of the intermediate cylinder located in the main liquid chamber.

2. The vibration-damping device according to claim 1, wherein the intermediate cylinder separates the elastic body into the inner portion and the outer portion in the radial direction,
the inner portion connects together the inner member and the intermediate cylinder, and
the outer portion connects together the outer cylinder and the intermediate cylinder.

3. The vibration-damping device according to claim 1, wherein the inner portion of the elastic body has rigidity lower than the outer portion.

4. The vibration-damping device according to claim 2, wherein the inner portion of the elastic body has the rigidity lower than the outer portion.

## Patentansprüche

1. Schwingungsdämpfungsvorrichtung (1), die Folgendes umfasst: einen äußeren Zylinder (11), der mit dem einen von einem Schwingungserzeugungsabschnitt und einem Schwingungsaufnahmeabschnitt verbunden ist, ein inneres Element (12), das mit dem anderen von dem Schwingungserzeugungsabschnitt und dem Schwingungsaufnahmeabschnitt verbunden ist, einen elastischen Körper (13), der den äußeren Zylinder und das innere Element (12) miteinander verbindet, und ein Trennungselement (17), das dafür konfiguriert ist, eine Flüssigkeitskammer in dem äußeren Zylinder in eine Hauptflüssigkeitskammer (15) mit dem elastischen Körper als ein Teil einer Trennwand und eine Nebenflüssigkeitskammer (16) zu trennen, wobei ein Öffnungsdurchgang (21), durch den die Hauptflüssigkeitskammer mit der Nebenflüssigkeitskammer in Verbindung steht, in dem Trennungselement geformt ist, wobei die Schwingungsdämpfungsvorrichtung Folgendes umfasst: einen Zwischenzylinder (31), der zwischen dem äußeren Zylinder und dem inneren Element angeordnet und mit dem elastischen Körper verbunden ist, und ein Teilungselement (32), das mit dem Zwischenzylinder verbunden ist und die Hauptflüssigkeitskammer in eine erste Hauptflüssigkeitskammer (15a), die einen inneren Abschnitt des elastischen Körpers (13a) aufweist, der als ein Teil der Trennwand in Radialrichtung nach innen von dem Zwischenzylinder angeordnet ist, und eine zweite Hauptflüssigkeitskammer (15b), die einen äußeren Abschnitt des elastischen Körpers (13b) aufweist, der als ein Teil der Trennwand in Radialrichtung nach außen von dem Zwischenzylinder angeordnet ist, teilt, wobei das innere Element in Radialrichtung nach innen von dem Zwischenzylinder angeordnet ist, **dadurch gekennzeichnet, dass** das Teilungselement einen Teilungselement-Hauptkörper (35), in dem eine Aufnahmekammer (37), ein erstes Verbindungsloch (37a), durch das die Aufnahmekammer mit der ersten Hauptflüssigkeitskammer in Verbindung steht, und ein zweites Verbindungsloch (37b), durch das die Aufnahmekammer mit der zweiten Hauptflüssigkeitskammer in Verbindung steht, geformt sind, und ein bewegliches Element (36), das in der Aufnahmekammer aufgenommen wird und entsprechend einem Druckunterschied zwischen der ersten Hauptflüssigkeitskammer und der zweiten Hauptflüssigkeitskammer verschoben oder verformt wird, einschließt, und wobei der Teilungselement-Hauptkörper einen Endöffnungsabschnitt des Zwischenzylinders sperrt, der in der Hauptflüssigkeitskammer angeordnet ist.

2. Schwingungsdämpfungsvorrichtung nach Anspruch 1, wobei der Zwischenzylinder den elastischen Körper in der radialen Richtung in den inneren Abschnitt und den äußeren Abschnitt trennt,
der innere Abschnitt das innere Element und den Zwischenzylinder miteinander verbindet und
der äußere Abschnitt den äußeren Zylinder und den Zwischenzylinder miteinander verbindet.

3. Schwingungsdämpfungsvorrichtung nach Anspruch 1, wobei der innere Abschnitt des elastischen Körpers eine niedrigere Steifigkeit aufweist als der äußere Abschnitt.

4. Schwingungsdämpfungsvorrichtung nach Anspruch 2, wobei der innere Abschnitt des elastischen Körpers eine niedrigere Steifigkeit aufweist als der äußere Abschnitt.

## Revendications

1. Dispositif d'amortissement de vibrations (1), comprenant : un cylindre externe (11 connecté à une parmi une partie de génération de vibrations et une partie de réception de vibrations, un élément interne (12) connecté à l'autre parmi la partie de génération de vibrations et la partie de réception de vibrations; un corps élastique (13) connectant le cylindre externe et l'élément interne (12) l'un à l'autre ; et un élément de séparation (17) configuré pour séparer une chambre de liquide dans le cylindre externe en une chambre de liquide principale (15), avec le corps élastique en tant que partie d'une paroi de séparation, et une chambre de liquide auxiliaire (16), un passage d'orifice (21), à travers lequel la chambre de liquide principale communique avec la chambre de liquide auxiliaire, étant formé dans l'élément de séparation, dans lequel le dispositif d'amortissement de vibrations comprend : un cylindre intermédiaire (31) disposé entre le cylindre externe et l'élément interne et connecté au corps élastique ; et un élément de division (32) connecté au cylindre intermédiaire et divisant la chambre de liquide principale en une première chambre de liquide principale (15a), comportant une partie interne du corps élastique (13a) située radialement vers l'intérieur du cylindre intermédiaire en tant que partie de la paroi de séparation, et une deuxième chambre de liquide principale (15b), comportant une partie externe du corps élastique (13b) située radialement vers l'extérieur du cylindre intermédiaire en tant que partie de la paroi de séparation, l'élément interne étant disposé radialement vers l'intérieur du cylindre intermédiaire, **caractérisé en ce que** l'élément de division inclut un corps principal d'élément de division (35), dans lequel une chambre de réception (37), un premier trou de communication (37a), à travers lequel la chambre de réception communique avec la première chambre de liquide principale, et un deuxième trou de communication (37b), à travers lequel la chambre de réception communique avec la deuxième chambre de liquide principale, sont formés, et un élément mobile (36) reçu dans la chambre de réception et déplacé ou déformé en fonction d'une différence de pression entre la première chambre de liquide principale et la deuxième chambre de liquide principale, et le corps principal d'élément de division bloquant une partie d'ouverture d'extrémité du cylindre intermédiaire située dans la chambre de liquide principale.

2. Dispositif d'amortissement de vibrations selon la revendication 1, dans lequel le cylindre intermédiaire sépare le corps élastique en la partie interne et la partie externe dans la direction radiale ;
la partie interne connecte l'élément interne et le cylindre intermédiaire l'un à l'autre ; et
la partie externe connecte le cylindre externe et le cylindre intermédiaire l'un à l'autre.

3. Dispositif d'amortissement de vibrations selon la revendication 1, dans lequel la partie interne du corps élastique a une rigidité inférieure à celle de la partie externe.

4. Dispositif d'amortissement de vibrations selon la revendication 2, dans lequel la partie interne du corps élastique a une rigidité inférieure à celle de la partie externe.
